# FASCICULE DE BREVET EUROPEEN

(11) **EP 2 614 116 B1**
(45) Date de publication et mention de la délivrance du brevet: **24.12.2014**
(21) Numéro de dépôt: 11755377.6
(22) Date de dépôt: 25.08.2011
(51) Int. Cl.: C08L 83/04, C08J 9/00, C08J 9/02, B41J 27/04, B41F 17/00, F16J 15/00, C08K 3/36, C08K 5/05, C08G 77/12, C08G 77/20, F16J 15/02

(54) **COMPOSITION SILICONE POUR MOUSSE ÉLASTOMÈRE**
SILIKONZUSAMMENSETZUNG FÜR ELASTOMERSCHAUMSTOFF
SILICONE COMPOSITION FOR ELASTOMER FOAM

(30) Priorité: 06.09.2010 FR 1003553
(43) Date de publication de la demande: 17.07.2013
(73) Titulaire: Bluestar Silicones France, 69007 Lyon (FR)
(72) Inventeur: BLANC, Delphine, F-69007 Lyon (FR); CANPONT, Dominique, F-69620 (FR)
(74) Mandataire: Mekki, Boualem
(86) Numéro de dépôt international: PCT/FR2011/000473
(87) Numéro de publication internationale: WO 2012/032231

(56) Documents cités:
- EP-A1- 1 094 091
- WO-A1-2007/141250
- JP-A- 2006 083 237
- US-A- 5 459 167
- US-A- 5 900 438

## Description

La présente invention a trait à de nouvelles compositions organopolysiloxaniques de faible viscosité, c'est-à-dire inférieure à 55 000 mPa.s et de préférence inférieure à 30 000 mPa.s, destinées à générer une mousse en élastomère silicone (appelée « mousse de silicone » ou « mousse silicone ») présentant de bonnes propriétés physiques et mécaniques et de faible densité, c'est à dire inférieure à 0.35 g/cm³ et de préférence inférieure à 0,25 glcm³.

L'expression « mousse de silicone » ou « mousse silicone » désigne une composition de polyorganosiloxane sous la forme de mousse. Les mousses de silicone sont bien connues dans la technique et leur préparation est décrite dans un certain nombre de brevets.

L'expression « silice crystalline » désigne une silice sous sa forme naturelle dont le quartz est l'une des formes les plus connues et utilisées à contrario de la cristobalite et de la trydimite qui sont des formes beaucoups moins utilisées.

L'expression « silice de combustion » désigne les silices préparées par hydrolyse à haute température (pyrohydrolyse), dans une flamme, du tétrachlorure de silicium SiGl₄ suivant la réaction suivante :

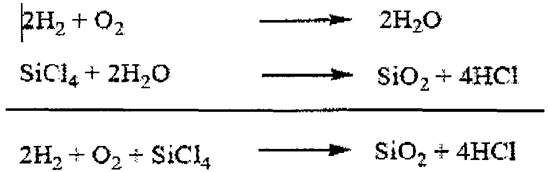

Cette réaction chimique libère une quantité importante de chaleur qui est évacuée dans une zone de refroidissement. Le seul sous-produit est l'acide chlorhydrique qui est séparé en sortie du procédé et recyclé pour former, par réaction avec du silicium, du tétrachlorure de silicium.

Concernant les mousses silicones, il existe plusieurs techniques d'obtention. Une première technique met en oeuvre une réaction de condensation avec libération de sous-produits volatils. C'est le cas notamment pour les système utilisant la réaction de condensation du type SiH-SiOH qui permet de libérer de l'hydrogène qui joue alors le rôle d'agent porogène. Par exemple, le brevet français n° FR-A-2 589 872 décrit une composition précurseur de mousse de silicone comprenant un polymère organosilicié comprenant des motifs siloxanes ayant des groupes hydroxyles liés au silicium, un polymère organosilicié comprenant des motifs siloxanes ayant des atomes d'hydrogène liés au silicium, un catalyseur, par exemple un composé de l'étain, et une charge finement divisée comprenant de la silice qui a été traitée pour la rendre hydrophobe. Ces compositions durcissent par une réaction de polycondensation et bien qu'étant satisfaisantes à beaucoup d'égards, les compositions catalysées à l'étain décrites dans le brevet français n° FR-A-2 589 872 sont considérées comme peu satisfaisantes du fait de l'utilisation d'un catalyseur à l'étain qui peut exercer certains effets toxiques indésirables.

Une variante décrite dans le brevet américain n° US-B-3,923,705 a consisté à proposer des compositions comprenant des polydiorganosiloxanes portant des atomes d'hydrogène liés au silicium disponible pour une réaction de condensation avec des polydiorganosiloxanes portant des groupes hydroxyles liés au silicium (silanols) en présence d'un catalyseur au platine. Cette réaction permet ainsi de contruire le réseau tout en produisant de l'hydrogène gazeux nécessaire à la formation d'une mousse de silicone. Dans ce type de formulation, la formation de gaz est proportionnelle à la vitesse de réticulation et par conséquent la densité des mousses obtenues est difficilement contrôlable expliquant ainsi les difficultés à obtenir des mousses de basse densité par cette technique. Ces compositions peuvent comprendre en outre un polydiorganosiloxane portant des groupes vinylés liés au silicium qui réticulent simultanément par des réaction de polyaddition avec les polydiorganosiloxanes portant des atomes d'hydrogène liés au silicium participant ainsi à la construction du réseau de la mousse de silicone.

Selon une autre variante décrite dans le brevet américain n° US-B-4,189,545, des mousses de silicone sont préparées à partir d'une composition comprenant de l'eau, un polydiorganosiloxane portant des groupes vinyle liés au silicium, un polydiorganosiloxane contenant des atomes d'hydrogène liés au silicium et portés par des motifs dans la chaîne et non pas uniquement en bout de chaîne pour pouvoir jouer le rôle de réticulant. L'eau réagit avec le polysiloxane à fonction hydrures produisant ainsi de l'hydrogène gazeux et un silanol. Le silanol réagit alors avec le polydiorganosiloxane à fonction hydrures par une réaction de condensation générant ainsi une deuxième molécule d'hydrogène gazeux alors qu'un autre polydiorganosiloxane portant des groupes vinyle liés au silicium va simultanément réagir par une réaction d'addition avec un autre polydiorganosiloxane à fonction hydrure, participant ainsi à la construction du réseau de la mousse de silicone. L'apport principal apporté par cette technique est que l'hydrogène gazeux est produit sans addition de silanol et avec l'addition d'une petite quantité d'eau.

Dans le brevet US-4,590,222 des mousses de silicone sont préparées à partir de composition comprenant un polydiorganosiloxe, une résine, un catalyseur à base de platine, un organohydrogénosiloxane, un polyorganosiloxane porteur de groupements hydroxyles sur les motifs bout de chaîne, une charge et un alcool organique.

Cependant, les techniques faisant usage de silanol comme source d'agent porogène ont tendance à donner des mousses présentant des densités trop élevées pour de nombreuses applications, par exemple celles destinées pour l'industrie du transport. De plus, lorsque des mousses de densité moyenne sont obtenues, cela se fait le plus souvent au détriment des propriétés mécaniques (résistance à la rupture, résistance au déchirement,...).

Une autre technique consiste à utiliser des agents ou des additifs porogènes, additionnés dans la matrice silicone, qui, sous l'action de la chaleur, expansent le matériau:
- soit par décomposition avec libération de gaz, cas notamment des dérivés de type azo, par exemple l'azodicarbonamide, qui va permettre de libérer de l'azote, du gaz carbonique et de l'ammoniaque. Ce type d'agent porogène, malgré le fait qu'il soit largement utilisé pour d'autres matériaux, pose de sérieux problèmes de toxicité (libération d'hydrazine),
- soit par changement de phase (liquide à gaz) - cas notamment des solvants à faible point d'ébullition.

Enfin, une technique alternative consiste à introduire mécaniquement un gaz (par exemple de l'azote) dans la matrice silicone sous pression suivi d'un passage dans un mélangeur dynamique ce qui permet d'accéder à des mousses ayant de bonnes caractéristiques, mais elles nécessitent un équipement lourd et onéreux.

Ainsi, malgré l'existence des nombreuses techniques citées ci-dessus, la production de mousses de silicones de basse densité (inférieures à 0,35 g/cm³ ou 0,25 g/cm³) à partir de composition peu visqueuse ou de basse viscosité (viscosité inférieure à 55000 mPa.s ou à 30 000 mPa.s) reste toujours un problème qui suscite l'intérêt des siliconiers. Par exemple, le brevet américain n° US-B-4,418,157 décrit des compositions précurseurs de mousses de silicone présentant, avant réticulation, une viscosité inférieure à 100 000 mPa.s. Comme il est indiqué dans ce brevet, il est connu (voir colonne 2, lignes 13 à 24) que plus la viscosité de la composition est élevée et plus densité de la mousse résultant est faible. C'est ainsi qu'une approche intéressante est décrite dans ce brevet qui consite à préparer une composition ayant une viscosité inférieure à 100 000 mPa.s et comprenant une base silicone apte à réticuler par polyaddition ou polycondensation, à laquelle on ajoute une résine silicone de type « MQ » (nomenclature des silicones telle que décrite par exemple dans l'ouvrage de Walter NOLL "Chemistry and Technology of Silicones", Academic Press, 1968, 2ème édition, aux pages 1 à 9), comportant éventuellement des fonctions vinylées et de l'eau qui est décrit comme un constituant clé pour la génèse d'hydrogène gazeux comme décrit ci-dessus. L'addition de cette résine spécifique permet d'abaisser la densité de la mousse obtenue et ceci bien que la composition précurseur soit de basse viscosité. Cependant, ce type de résine est une matière première couteuse et dont la synthèse industrielle nécessite un équipement lourd et onéreux.

Un autre exemple d'une composition précurseur de mousse de silicone est décrit dans la référence WO-A-00146282. La composition décrite comprend une base silicone réticulant par une réaction de polyaddition (huile polyorganosiloxanes à fonction =SiH/ huiles polyorganosiloxane à fonction ≡SiVi/ catalyseur au Pt, avec Vi= groupement vinyle), un composé à fonction hydroxyle et de la wollastonite (les exemples décrivent des compositions fortement chargées, environ 21 parties en poids de charges par rapport au poids total de la composition). Il est à noter que les viscosités des compositions préparées dans les exemples (Exemple 1, Tableau 2) sont toutes supérieures à 190 000 mPa.s. Comme il est indiqué ci-dessus, il est connu (voir brevet US-B-4,418,157 à la colonne 2, lignes 13 à 24) que plus la viscosité de la composition est élevée et plus densité de la mousse résultant est faible. On remarquera que de la composition la plus visqueuse (référence WO-A-00/46282. Tableau 2, page 13, composition [1-1], viscosité de 274,000 mPa.s) à la composition la moins visqueuse [1-3] (viscosité = 198,000 mPa.s) la densité de la mousse obtenue augmente (de 0,20 g/cm³ à 0,25 g/cm³) confirmant ainsi l'enseignement connu concernant la difficulté d'obtenir des mousses de faible densité à partir de composition de faible viscosité (viscosité inférieure à 55000 mPa.s ou à 30000 mPa.s) avant réticulation. Hors, pour des raisons d'optimisation quand à la mise en oeuvre de ces compositions, soit par l'utilisateur final soit par les industriels utilisant des lignes de production de mousse de silicone, il est vital de pouvoir disposer d'une composition qui, avant réticulation, se présente sous une forme peu visqueuse et s'écoulant facilement dans les outils appropriés.

Une autre problématique rencontrée dans les mousses de l'art antérieur concerne les tailles et la distributions des tailles des bulles du matériau en mousse silicone. En effet, lorsque celles-ci sont trop importantes, elles entraînent une anisotropie des propriétés physiques suivant les points de mesure. Par « anisotrotrie des propriétés physiques » on entend une variation des valeurs mesurées suivant le point de mesure de la mousse silicone.

Par « bulles de petite taille» pour une mousse silicone, on entend des bulles dont la largeur (ou diamètre) est inférieure ou égale à environ 1mm, par « bulles de taille moyenne » la largeur (ou diamètre) est comprise entre 1 et 1,5 mm, alors que pour des « bulles de grosse taille » la largeur (ou diamètre) est supérieure à 1,5 mm.

Par exemple, le document WO 2007/141250 décrit une composition organopolysiloxanique précurseur d'une mousse silicone comprenant :
- au moins un polyorganosiloxane **(A)** présentant, par molécule, au moins deux groupes alcényles, en C₂-C₆ liés au silicium, et ayant une viscosité comprise entre 10 et 300 000 mPa.s,
- au moins un polyorganosiloxane **(B)** présentant, par molécule, au moins deux atomes d'hydrogène liés au silicium et de préférence au moins trois motifs =SiH et ayant une viscosité comprise entre 1 et 5000 mPa.s,
- une quantité catalytiquement efficace d'au moins un catalyseur **(C)** composé d'au moins un métal appartenant au groupe du platine,
- au moins un agent porogène **(D)** choisi parmi le groupe constitué par les alcanols comportant de 1 à 18 atomes de carbone,
- éventuellement au moins une charge minérale et/ou métallique **(F)** qui peut être une silice de combustion qui est décrite comme étant généralement caractérisée par une surface spécifique comprise entre 20 et 300 m²/g,
- éventuellement au moins un additif **(G)**, et
- avec comme condition supplémentaire que le choix, la nature et la quantité des constituants sont déterminés de manière à ce que la viscosité de ladite composition doit être inférieure à 50 000 mPa.s, de préférence inférieure à 35 000 mPa.s et encore plus préférentiellement inférieure à 15 000 mPa.s.

Cependant, les compositions exmplifiées contiennent toutes des terres de diatomées qui ne permettent pas d'obtenir simultanément une bonne stabilité au stockage et une mousse homogène (problème d'anisotropie des propriétés physiques suivant les points de mesure).

Pour certaines applications, telle que la tampographie (ou l'impression sur rouleau), des propriétés spécifiques des mousses de silicone sont recherchées. En effet, la tampographie est un procédé d'impression indirect. Le motif à imprimer est préalablement gravé sur un support, le cliché est ensuite fixé sur une machine à tampographier; puis l'encre est déposée dans les parties gravées afin de transférer le motif sur l'objet à imprimer au moyen d'un tampon ou d'un rouleau en mousse de silicone. Pour obtenir une gravure et une impression de qualité, il est primordial que le tampon ou le rouleau en mousse de silicone soit constitué de bulles de petites tailles (la largeur ou diamètre est inférieure ou égale à environ 1mm) et que la distribution des tailles des bulles au sein du matériau soit homogène de manière à ce que l'encre puisse être déposée et transférée de manière uniforme sur la couche réceptrice supporté par la couche en mousse de silicone tout en permettant une reproduction précise de la gravure. Ainsi, la nécessité d'obtenir dès mousses ayant des bulles de petite taille et une distribution homogène des tailles des bulles est particulièrement recherchée pour cette application.

De plus, l'industrie des mousses de silicones est toujours à la recherche de nouvelles compositions, précurseurs de mousse de silicone, ayant une faible viscosité, c'est-à-dire inférieure à 55000 mPa.s ou à 30 000 mPa.s à 25°C, et susceptible de présenter de bonnes propriétés physiques après réticulation.

Toutes les viscosités dont il est question dans le présent mémoire correspondent à une grandeur de viscosité dynamique qui est mesurée, de manière connue en soi, à 25°C. Les viscosités sont mesurées à l'aide d'un viscosimètre BROOKFIELD selon les indications de la norme AFNOR NFT 76-102. Ces viscosités correspondent à une grandeur de viscosité dynamique à 25°C dite "Newtonienne", c'est-à-dire la viscosité dynamique qui est mesurée, de manière connue en soi, à un gradient de vitesse de cisaillement suffisamment faible pour que la viscosité mesurée soit indépendante du gradient de vitesse.

Cependant, lorsque l'on essaye de formuler des compositions de faible viscosité ayant des charges renforçantes silicées pour améliorer les propriétés mécaniques, un des problèmes majeur rencontré est l'apparition d'une décantation qui s'observe surtout après un stockage de quelques mois. En effet, ce phénomène s'observe lorsque ces compositions sont stockées, par exemple sous la forme d'un système bicomposant (ou plus communément appelé « RTV-2 ») pour des compositions qui peuvent mousser à température ambiante. En effet, pour des raisons de réactivité (réticulation et moussage) et de sécurité, les composants sont placés dans deux parties distinctes pour séparer le catalyseur et l'agent porogène à fonction hydroxyle de l'huile silicone à groupement SiH. Ces phénomènes de décantation rendent la composition inutilisable pour certaines applications.

La problématique ici considérée peut donc se résumer comme la recherche d'un compromis technique entre des spécifications, à priori antinomiques, pour la préparation d'une composition ayant une faible viscosité, c'est-à-dire inférieure à 55000 mPa.s ou à 30000 mPa.s, ne présentant plus de problème de décantation lorsqu'une charge renforçante silicée est utilisé et précurseur d'une mousse de silicone qui a une faible densité, c'est-à-dire inférieure à 0,35 g/cm³ et de préférence inférieure à 0,25 g/cm³, de bonnes propriétés mécaniques, des tailles de bulle de l'ordre inférieure ou égale à 1 mm et une distribution homogène des tailles des bulles au sein du matériau moussé.

La présente invention a donc pour objectif de fournir une nouvelle composition organopolysiloxanique de faible viscosité, c'est-à-dire inférieure 55000 mPa.s ou à 30000 mPa.s, destinée à générer, après réticulation et/ou durcissement, une mousse de silicone de faible densité, c'est-à-dire inférieure à 0,35 g/cm³ et de préférence inférieure à 0,25 g/cm³, tout en obtenant des mousse de silicone présentant de bonnes propriétés mécaniques, des tailles de bulle dont la largeur ou le diamètre est inférieur ou égal à environ 1mm et une distribution homogène des tailles des bulles au sein du matériau.

La demanderesse a maintenant trouvé de manière très surprenante qu'il est possible d'obtenir une mousse de silicone de faible densité présentant une densité inférieure à 0,35 g/cm³et dans certain cas inférieure à 0,25 g/cm³, des tailles de bulle dont la largeur ou le diamètre est inférieur ou égal à environ 1 mm et une distribution homogène des tailles des bulles et préparée à partir d'une composition spécifique dont la viscosité avant réticulation est inférieure 55000 mPa.s ou inférieure à à 30000 mPa.s. et qui ne présente plus de problème de décantation lorsque des charges renforçantes silicées sont utilisées.

La présente invention a donc pour objet une composition organopolysiloxanique **X** précurseur d'une mousse silicone comprenant :
- au moins un polyorganosiloxane **A** ayant une viscosité comprise entre 10 et 300 000 mPa.s et présentant, par molécule, au moins deux groupes alcényles en C₂-C₆ liés au silicium,
- au moins un polyorganosiloxane **B** ayant une viscosité comprise entre 1 et 5000 mPa.s et présentant, par molécule, au moins deux motifs ≡SiH et de préférence au moins trois motifs =SiH,
- une quantité catalytiquement efficace d'au moins un catalyseur **C** qui est un composé dérivé d'au moins un métal appartenant au groupe du platine,
- au moins un agent porogène **D**,
- éventuellement au moins une huile **E** diorganopolysiloxanique bloquée à chaque extrémité de sa chaîne par un motif triorganosiloxy dont les radicaux organiques liés aux atomes de silicium, sont choisis parmi les radicaux alkyles ayant de 1 à 8 atomes de carbone inclus tels que les groupes méthyle, éthyle, propyle et 3,3,3-trifluoropropyle, les groupes cycloalkyles comme les groupes cyclohexyle, cycloheptyle, cyclooctyle et les groupes aryle tels que xylyle, tolyle et phényle,
- au moins une charge minérale **F** qui est une silice de combustion dont la surface spécifique **S** est strictement inférieure à 65 m²/g, de préférence strictement inférieure à 50 m²/g et encore plus préférentiellement inférieure ou égale à 45m²/g,
- éventuellement au moins un additif **G**, et
- éventuellement au moins une résine polyorganosiloxane H,
- avec comme condition supplémentaire que le choix, la nature et la quantité des constituants sont déterminés de manière à ce que la viscosité de ladite composition organopolysiloxanique **X** soit inférieure à 55000 mPa.s, de préférence inférieure à 30 000 mPa.s et encore plus préférentiellement inférieure à 25 000 mPa.s et lesdites viscosités sont des viscosités dynamiques mesurées à 25°C à l'aide d'un viscosimètre BROOKFIELD selon les indications de la norme AFNOR NFT 76-102.

La Demanderesse a découvert, de manière fortuite et inatendue, que l'utilisation d'une silice de combustion dont la surface spécifique **S** est strictement inférieure à 65 m²/g, et de préférence strictement inférieure à 50 m²/g, dans une composition précurseur d'une mousse silicone permettait d'atteindre les objectifs précités.

Il est particulièrement avantageux d'utiliser des silices de combustion dont la surface spécifique **S** est comprise dans l'intervalle suivant 25m²/g ≤ **S** ≤ 45m²/g de manière à pouvoir trouver un compromis entre les propriétés recherchées.

Selon un mode de réalisation avantageux, la charge minérale **F** est une silice de combustion dont la surface a été préalablement traitée par exemple par traitement avec les divers composés organosiliciques habituellement employés pour cet usage. Ainsi, ces composés organosiliciques peuvent être des organochlorosilanes, des diorganocyclopolysiloxanes, des hexaorganodisiloxanes, des hexaorganodisilazanes, des diorganopolysiloxanes ou des diorganocyclopolysilazanes (brevets français FR-A-1 126 884, FR-A-1 136 885, FR-A-1 236 505, brevet anglais GB-A-1 024 234).

Selon un mode de réalisation préféré, la quantité de la charge minérale F est comprise entre 0,1 et 20 parties en poids pour 100 parties en poids de la composition organopolysiloxanique **X**.

La composition selon l'invention peut éventuellement contenir au moins une charge renforçante F' qui a pour but de conférer de bonnes caractéristiques mécaniques et rhéologiques aux élastomères découlant du durcissement des compositions conformes à l'invention. On peut utiliser, par exemple, des charges minérales très finement divisés dont le diamètre particulaire moyen est inférieur à 0,1 µm. Parmi ces charges figurent les silices de combustion et les silices de précipitation. Ces charges peuvent également se présenter sous la forme de produits plus grossièrement divisés, de diamètre particulaire moyen supérieur à 0,1 µm. Comme exemples de telles charges, on peut citer le quartz broyé, les silices de diatomées, le carbonate de calcium éventuellement traité en surface par un acide organique ou par un ester d'un acide organique, l'argile calcinée, l'oxyde de titane du type rutile, les oxydes de fer, de zinc, de chrome, de zirconium, de magnésium, les différentes formes d'alumine (hydratée ou non), le nitrure de bore, le lithopone, le métaborate de baryum, le sulfate de baryum, les microbilles de verre. Ces charges peuvent avoir été modifiées en surface par traitement avec les divers composés organosiliciques habituellement employés pour cet usage. Ainsi ces composés organosiliciques peuvent être des organochlorosilanes, des diorganocyclopolysiloxanes, des hexaorganodisiloxanes, des hexaorganodisilazanes ou des diorganocyclopolysilazanes (brevets français FR-A-1 126 884, FR-A-1 136 885, FR-A-1 236 505, brevet anglais GB-A-1 024 234). Les charges traitées renferment, dans la plupart des cas, de 3 à 30 % de leur poids de composés organosiliciques. La quantité utilisée est fonction des propriétés mécaniques recherchées et en général est comprise entre 0,1 et 20 parties en poids pour 100 parties en poids de la composition organopolysiloxanique **X**.

Selon un mode de réalisation, l'agent porogène D est un composé comprenant une fonction hydroxyle et qui n'est pas un retardateur ou un inhibiteur de la réaction d'hydrosilylation tels qu'un alcool α-acétylènique.

De préférence, l'agent porogène **D** est un composé choisi parmi le groupe constitué par un polyol, un alcool qui n'est pas un retardateur ou un inhibiteur de la réaction d'hydrosilylation tels qu'un alcool α-acétylènique, un organosilane ou un polyorganosilane contenant au moins une fonction silanol et l'eau.

De préférence, l'agent porogène **D** est un composé choisi parmi le groupe constitué par un diol qui n'est pas un retardateur ou un inhibiteur de la réaction d'hydrosilylation tels qu'un alcool α-acétylènique, un alcool organique ayant de 1 à 12 atomes de carbone et ayant une fonction hydroxyle par molécule, un organosilane ou un polyorganosilane contenant au moins une fonction silanol et l'eau.

Lorsque l'agent porogène est l'eau, il peut être introduit sous la forme d'une émulsion aqueuse, par exemple une émulsion silicone directe huile dans eau ou une émulsion silicone inverse eau-dans-huile comprenant une phase continue huileuse silicone, une phase aqueuse et un stabilisant.

Les émulsions directes peuvent être obtenues par des procédés d'émulsification bien connus de l'homme de l'art, le procédé consiste à mettre en émulsion dans une phase aqueuse contenant un stabilisant, par exemple un tensioactif, un mélange des constituants. On obtient alors une émulsion huile dans eau. Puis les constituants manquants peuvent être ajoutés, soit directement à l'émulsion (cas des constituants hydrosolubles), soit ultérieurement sous la forme d'émulsion (cas des constituants solubles dans la phase silicone). La granulométrie de l'émulsion obtenue peut être ajustée par les méthodes classiques connues de l'homme du métier, notamment en poursuivant l'agitation dans le réacteur pendant une durée adaptée.

Les émulsions silicone inverses sont constituées de gouttelettes d'eau dans une phase continue huile silicone. Elles peuvent être obtenues par des procédés d'émulsification bien connus de l'homme de l'art et qui impliquent le mélange d'une phase aqueuse et d'une phase huileuse sans ou avec broyage, c'est à dire sous fort cisaillement. Le stabilisant est de préférence choisi dans le groupe comprenant :
- les tensioactifs non-ioniques, anioniques, cationiques, ou même zwitterioniques;
- les silicones polyéthers;
- les particules solides, de préférence des particules de silice éventuellement en combinaison avec au moins un co-stabilisant, préférablemertt sélectionnés parmi les tensioactifs non-ioniques, anioniques, cationiques ou même zwitterioniques;
- et leurs mélanges.

Les tensioactifs sont choisis plus généralement en fonction de l'HLB. Le terme HLB (hydrophilic lipophilic balance) désigne le rapport de l'hydrophilie des groupements polaires des molécules de tensioactifs à l'hydrophobie de leur partie lipophile. Des valeurs de HLB sont notamment rapportées dans différents manuels de base tels que le «Handbook des excipients pharmaceutiques, The Pharmaceutical Press, London, 1994)».

Les émulsions eau/silicone peuvent être stabilisées aussi via des silicones polyéthers (Silicone surfactants - Surfactant Science series V86 Ed Randal M. Hill (1999).

Des exemples d'agents porogènes **D** sont par exemple :
- l'eau,
- des alcools en C₁ à C₁₂ et ayant un groupement hydroxyle, par exemple le méthanol, l'éthanol, le n-propanol, l'isopropanol, un butanol tels que le n-butanol, le 2-butanol et le tert-butanol, un pentanol, un hexanol, le n-octanol et l'alcool benzylique, ou
- des polyols tels que les diols en C₃ à C₁₂ ayant deux groupements hydroxyles, linéaire ou ramififiés et comportant éventuellement un noyeau aromatique non fonctionalisé par un groupement hydroxyle. Des exemples de diols sont, par exemple, le 1,4-butanediol, le 1,5-pentanediol et le 1,7 heptanediol.

Le polyorganosiloxane **A** présentant, par molécule, au moins deux groupes alcényles, en C₂-C₆ liés au silicium, et ayant une viscosité comprise entre 10 et 300 000 mPa.s, peut être notamment formé :
- d'au moins deux motifs siloxyle de formule : 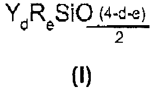 dans laquelle :
   - Y est un alcényle en C₂-C₆, de préférence vinyle,
   - R est un groupe hydrocarboné monovalent n'ayant pas d'action défavorable sur l'activité du catalyseur et est généralement choisi parmi les groupes alkyles ayant de 1 à 8 atomes de carbone inclus tels que les groupes méthyle, éthyle, propyle et 3,3,3-trifluoropropyle, les groupes cycloalkyles comme les groupes cyclohexyle, cycloheptyle, cyclooctyle et les groupes aryle tels que xylyle, tolyle et phényle,
   - d= 1 ou 2, e= 0, 1 ou 2 et la somme d+e=1, 2 ou 3, et
   - éventuellement de motifs siloxyle de formule moyenne suivante: 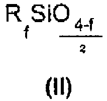
dans laquelle R a la même signification que ci-dessus et f = 0, 1, 2 ou 3.

Des exemples de polyorganosiloxane **A** sont composés suivants : les diméthylpolysiloxanes à extrémités diméthylvinylsilyles, les copolymères (méthylvinyl) (diméthyl) polysiloxanes à extrémités triméthylsilyles, les copolymères (méthylvinyl) (diméthyl) polysiloxanes à extrémités diméthylvinylsilyles. Dans la forme la plus recommandée le polyorganosiloxane **A** contient des motifs siloxy vinyliques terminaux.

Comme exemple de polyorganosiloxane **B** présentant, par molécule, au moins deux atomes d'hydrogène liés au silicium et de préférence au moins trois motifs =SiH et ayant une viscosité comprise entre 1 et 5000 mPa.s sont ceux comprenant :
- des motifs siloxyles de formule : 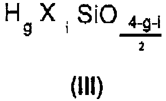 dans laquelle :
   - X est un groupe hydrocarboné monovalent n'ayant pas d'action défavorable sur l'activité du catalyseur et est généralement choisi parmi les groupes alkyles ayant de 1 à 8 atomes de carbone inclus tels que les groupes méthyle, éthyle, propyle et 3,3,3-trifluoropropyle, les groupes cycloalkyles comme les groupes cyclohexyle, cycloheptyle, cyclooctyle et les groupes aryle tels que xylyle, tolyle et phényle,
   - g = 1 ou 2, de préférence égal à 1, i = 0, 1 ou 2, et g+i = 1, 2 ou 3, et
- éventuellement des motifs siloxyles de formule moyenne : 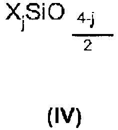 dans laquelle **X** a la même signification que ci-dessus et j = 0, 1, 2 ou 3.

Des polyorganosiloxane **B** appropriés sont les polyméthylhydrogénosiloxanes.

Le catalyseur **C** composé d'au moins un métal appartenant au groupe du platine est également bien connu. Les métaux du groupe du platine sont ceux connus sous le nom de platinoïdes, appellation qui regroupe, outre le platine, le ruthénium, le rhodium, le palladium, l'osmium et l'iridium. On utilise, de préférence, les composés du platine et du rhodium. On peut, en particulier, utiliser les complexes du platine et d'un produit organique décrit dans les brevets US-A-3 159 601, US-A-3 159 602, US-A-3 220 972 et les brevets européens EP-A-0 057 459, EP-A-0 188 978 et EP-A-0 190 530, les complexes du platine et d'organosiloxanes vinylés décrits dans les brevets US-A-3 419 593. Le catalyseur généralement préféré est le platine. La préférence va à la solution ou complexe de Karstedt, tel que décrit dans le brevet US-A-3 775 452.

Le constituant **E** est par exemple un polydiméthylsiloxane linéaire, non fonctionnalisé, c'est-à-dire à motifs récurrents de formule (CH₃)₂SiO_{2/2} et présentant à ses deux extrémités des motifs (CH₃)₃SiO_{1/2}.

Comme additif **G**, on peut notamment incorporer un inhibiteur du catalyseur afin de retarder la réticulation. On peut en particulier utiliser les amines organiques, les silazanes, les oximes organiques, les diesters de diacides carboxyliques, les cétones acétyléniques et les alcools acétyléniques (cf. par exemple FR-A-1 528 464, 2 372 874 et 2 704 553). L'inhibiteur, quand on en utilise un, peut être engagé à raison de 0,0001 à 5 parties en poids, de préférence 0,001 à 3 parties en poids, pour 100 parties de polyorganosiloxane **A**. Les phosphines, phosphites et phosphonites font aussi partie des inhibiteurs utilisables dans l'invention. On peut notamment citer les composés de formule P(OR)₃ décrit dans le brevet US-B-6 300 455. Tous ces composés sont connus de l'homme de l'art et sont disponibles commercialement. On peut citer par exemple les composés suivants :
- les polyorganosiloxanes substitués par au moins un alcényle pouvant se présenter éventuellement sous forme cyclique, le tétraméthylvinyltétrasiloxane étant particulièrement préféré,
- la pyridine,
- les phosphines et les phosphites organiques,
- les amides insaturés,
- les maléates alkylés, et
- les alcools acétyléniques qui ont pour formule :

   (R')(R")C(OH) -C ≡ CH

   formule dans laquelle,
   - R' est un radical alkyle linéaire ou ramifié, ou un radical phényle ;
   - R" est un atome d'hydrogène ou un radical alkyle linéaire ou ramifié, ou un radical phényle ; les radicaux R', R" et l'atome de carbone situé en α de la triple liaison pouvant éventuellement former un cycle ; et
   - le nombre total d'atomes de carbone contenu dans R' et R" étant d'au moins 5, de préférence de 9 à 20.

Pour lesdits alcools acétyléniques, on peut citer à titre d'exemples :
- l'éthynyl-1-cyclohexanol-1 ;
- le méthyl-3 dodécyne-1 ol-3 ;
- le triméthyl-3,7,11 dodécyne-1 ol-3 ;
- le diphényl-1,1 propyne-2 ol-1 ;
- l'éthyl-3 éthyl-6 nonyne-1 ol-3 ;
- le méthyl-2 butyne-3 ol-2 ;
- le méthyl-3 pentadécyne-1 ol-3. et
- le diallylmaléate ou dérivés du diallylmaléate.

Ces inhibiteurs sont ajoutés en quantité en poids comprise entre 1 et 50 000 ppm par rapport au poids de la composition silicone totale, notamment entre 10 et 10 000 ppm, de préférence entre 20 et 2000 ppm.

Comme autre additif **G**, on peut citer des additifs thixotropants pour permettre d'épaissir, dans une juste mesure, les compositions précurseurs de mousses élastomères silicones sans affecter pour autant leur fluidité nécessaire à leur manipulation et de manière à ce que la composition, avant réticulation, ne coule pas spontanément si ce n'est pas requis. Dans les applications visées par l'invention, il convient de disposer d'une composition réticulable, dotée de propriétés rhéologiques telles qu'elles puissent être aisément utilisable (bonne fluidité), d'une part, et telle qu'elle soit apte à conserver la forme qu'on leur a donné au moins pendant le temps nécessaire à la réticulation permet de fixer définitivement le mémoire de la forme visée, on peut qualifier les compositions silicones réticulable dans cet état rhéologique, de non coulantes. Il est important en effet dans ces dernières que la composition ne s'écoule pas dans les interstices du moule. L'additif thixotropant **G** modifie ainsi les propriétés rhéologiques de la composition en lui conférant un seuil d'écoulement élevé.

Comme agent thixotropant, on peut citer :
- les silices ultra fine en proportion appropriée ;
- les silicones polyéthers fonctionnalisés par des fonctions polyoxyde d'éthylène (POE) et/ou polyoxyde de propylène (POP) tels que les produits commerciaux suivants : DBP-534, DBP-732, DBE-224, DBE-821, DBE-621, DBE-814 ou DBE-712 commercialisés par la société Gelest Inc., DC-193 commercialisé par la société Dow Corning, ou les produits TEGOPREN^{®}-5878, TEGOPREN^{®}-3022, TEGOPREN^{®}-5863, TEGOPREN^{®}-3070, TEGOPREN^{®}-5851, TEGOPREN^{®}-5847, TEGOPREN^{®}-5840 commercialisés par la société Evonik Industries ainsi que les silicones polyéthers comprenant des motifs siloxyles suivants : 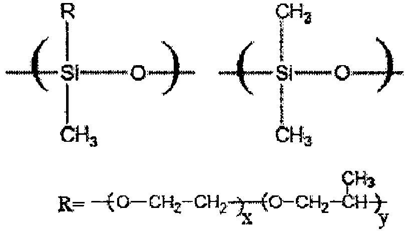 (x et y étant des nombres entiers ≥0 avec x+y≥1)
- les résines fluorées qui sont des polymères fluorés contenant des liaisons C-F tels que par exemple le polyfluorure de vinyle, le polyfluorure de vinylidène, le polytétrafluoroéthylène (PTFE), le polymonochlorotrifluoroéthylène, le polyffuoropolyéthers, les copolymères d'éthylène et de tétrafluoroéthylène, les copolymères de tétrafluoroéthylène et de perfluorovinyléther, les copolymères d'éthylèneperfluoro et de propylèneperfluoro. Des exemples sont décrits dans la demande de brevet internationale n° WO2000060011-A1 ; et
- les composés à base d'amine (chaîne polymère de préférence silicone greffé par des fonctions amines primaires ou amines secondaires) ou de polyglycols, et
- les polyorganosiloxanes fonctionnalisés par des fonctions amines cycliques et en particulier par des fonctions pipéridinyles qui peuvent être utilisés seuls ou en association avec des silices ayant subit un traitement de surface. Des exemples sont décrits dans la demande de brevet internationale WO2003037987-A1.

Les résines polyorganosiloxanes **H** sont des oligomères ou polymères organopolysiloxanes ramifiés bien connus et disponibles dans le commerce. Elles se présentent sous la forme de solutions, de préférence siloxaniques. Comme exemples d'oligomères ou de polymères organopolysiloxanes ramifiés on peut citer les résines MQ, les résines « MDQ », les résines « TD » et les résines « MDT », les fonctions alcényles pouvant être portées par les motifs siloxyles M, D et/ou T. L'homme du métier du domaine des silicones utilise couramment cette nomenclature qui représente les motifs siloxyles suivants :
R₃SiO_{1/2} (motif M), RSiO_{3/2} (motif T), R₂SiO_{2/2} (motif D) et SiO_{4/2} (Motif Q).

Avec R étant un groupement alcényle en C₂ à C₆, tel qu'un groupement vinyle, allyle ou héxenyle, un groupement hydrocarboné monovalent choisi parmi les groupes alkyles ayant de 1 à 8 atomes de carbone inclus tels que les groupes méthyle, éthyle, propyle et 3,3,3-trifluoropropyle, les groupes cycloalkyles comme les groupes cyclohexyle, cycloheptyle, cyclooctyle et les groupes aryle tels que xylyle, tolyle et phényle.

Les résines polyorganosiloxanes **H** particulièrement utiles selon l'invention sont des résines silicones à fonctions "Si-alcényle", c'est-à-dire des résines à fonctions vinyles, allyles et/ou héxényles. Selon un mode préféré de l'invention, les résines polyorganosiloxanes **H** sont des résines silicones vinylées. Avantageusement, elles comportent dans leurs structures de 0,1 à 20 % en poids de groupe(s) alcényle(s). Dans ces résines, les groupements alcényles peuvent être situés sur des motifs siloxyles (M), (D) ou (T). Ces résines peuvent être préparées par exemple selon le procédé décrit dans le brevet US -A- 2 676 182. Un certain nombre de ces résines sont disponibles dans le commerce, le plus souvent à l'état de solutions, par exemple dans du xylène.

Par exemple, la résine polyorganosiloxane **H** comprend :
- au moins deux motifs siloxyles différents choisis parmi ceux de formules:

   Wₐ Z_{b} SiO_{(4-(a+b))/2} **(V)**

   dans laquelle :
   - les symboles W, identiques ou différents, représentent chacun un groupe alcényle en C₂-C₆;
   - les symboles Z, identiques ou différents, représentent chacun un groupe hydrocarboné monovalent non hydrolysable, exempt d'action défavorable sur l'activité du catalyseur, éventuellement halogéné et, de préférence choisi parmi les groupes alkyles ainsi que parmi les groupes aryles, et
   - a est 1 ou 2, de préférence 1, b est 0, 1 ou 2 et la somme a + b est égale à 1, 2 ou 3,
- et éventuellement des motifs de formule suivante:

   Z_{c} SiO_{(4-c)/2} **(VI)**

   dans laquelle Z a la même signification que ci-dessus et c est égal à 0, 1, 2 ou 3,
avec le condition qu'au moins un des motifs **(V)** ou **(VI)** est un motif T ou Q.

Dans un mode préféré de réalisation de l'invention, la résine polyorganosiloxane **H** est une résine qui comprend des motifs Si-Vi (avec « Vi » signifiant un groupement vynyle) et est choisie parmi le groupe constitué par les résines silicones suivantes :
MD^{Vi}Q où les groupes vinyles sont inclus dans les motifs D,
MD^{Vi}TQ où les groupes vinyles sont inclus dans les motifs D,
- MM^{Vi}Q où les groupes vinyles sont inclus dans une partie des motifs M,
- MM^{Vi}TQ où les groupes vinyles sont inclus dans une partie des motifs M,
- MM^{Vi}DD^{Vi}Q où les groupes vinyles sont inclus dans les motifs M et D,
- et leurs mélanges,
avec :
- M = motif siloxyle de formule R₃SiO_{1/2}
- M^{Vi} = motif siloxyle de formule (R₂)(vinyle)SiO_{1/2}
- D = motif siloxyle de formule R₂SiO_{2/2}
- D^{Vi} = motif siloxyle de formule (R)(vinyle)SiO_{2/2}
- Q = motif siloxyle de formule SiO_{4/2};
- T = motif siloxyle de formule RSiO_{3/2}, et
- les groupements R, identiques ou diférents, sont des groupes hydrocarbonés monovalents choisis parmi les groupes alkyles ayant de 1 à 8 atomes de carbone inclus tels que les groupes méthyle, éthyle, propyle et 3,3,3-trifluoropropyle et les groupes aryle tels que xylyle, totyle et phényle.

Selon un autre mode particulier de l'invention, la résine polyorganosiloxane H est additionnée à la composition selon l'invention sous forme d'un mélange dans au moins une huile polyorganosiloxane.

Selon un autre mode de réalisation de l'invention, la résine polyorganosiloxane vinylée H est présente dans la composition d'élastomère silicone avant réticulation jusqu'à 25 %, de préférence jusqu'à 20% et encore plus préférentiellement entre 1 et 20% en poids par rapport au poids total de la composition selon l'invention.

Les polyorganosiloxanes vinylés **A**, les résines polyorganosiloxanes **H** et les polyorganosiloxanes à fonction hydrure **B** sont en quantités telles que l'on assure un ratio molaire entre les fonction ≡SiH et les fonctions ≡SiVi compris entre 0,5 et 10 et de préférence compris entre 1 et 6.

Selon un mode de réalisation particulier de l'invention, la composition organopolysiloxanique comprend :
(A) 100 parties en poids d'au moins un polyorganosiloxane **A** présentant, par molécule, au moins deux groupes alcényles, en C₂-C₆ liés au silicium, et ayant une viscosité comprise entre 10 et 300 000 mPa.s,
(B) de 0,5 à 50 parties en poids d'au moins un polyorganosiloxane **B** présentant, par molécule, au moins deux atomes d'hydrogène liés au silicium et de préférence au moins trois motifs ≡SiH et ayant une viscosité comprise entre 1 et 5000 mPa.s,
(C) une quantité catalytiquement efficace d'au moins un catalyseur **C** composé d'au moins un métal appartenant au groupe du platine,
(D) de 0,05 à 50 parties en poids d'au moins un agent porogène **D** selon l'invention et tel que décrit ci-dessus,
(E) de 0 à 50 parties en poids d'au moins une huile **E** diorganopolysiloxanique bloquée à chaque extrémité de sa chaîne par un motif triorganosiloxy dont les radicaux organiques liés aux atomes de silicium, sont choisis parmi les radicaux alkyles ayant de 1 à 8 atomes de carbone inclus tels que les groupes méthyle, éthyle, propyle et 3,3,3-trifluoropropyle, les groupes cycloalkyles comme les groupes cyclohexyle, cycloheptyle, cyclooctyle et les groupes aryle tels que xylyle, tolyle et phényle,
(F) de 0,5 à 50 parties d'au moins une charge minérale **F**,
(G) de 0 à 10 parties en poids d'au moins un additif **G,** et
(H) de 0 à 70 parties en poids de la résine polyorganosiloxane **H.**
- avec comme condition supplémentaire que le choix, la nature et la quantité des constituants sont déterminés de manière à ce que la viscosité de ladite composition est inférieure à 55000 mPa.s et de préférence inférieure à 30000 mPa.s.

Selon un autre de ses aspects, la présente invention est relative à un système bicomposant **P** précurseur de la composition organopolysiloxanique **X** selon l'invention et telle que définie ci-dessus et comprenant les constituants **A, B, C, D, E, F, G** et **H** tels que définis ci-dessus, ledit système bicomposant **S** étant caractérisé:
- en ce qu'il se présente en deux parties **P1** et **P2** distinctes destinées à être mélangées pour former ladite composition organopolysiloxanique **X** et comprenant lesdits constituants, et
- en ce que l'une des parties **P1** ou **P2** comprend le catalyseur **C** et l'agent porogène **D** et ne comprend pas le polyorganosiloxane **B.**

La présente invention a aussi pour objet une mousse de silicone susceptible d'être obtenue par réticulation et/ou durcissement de la composition organopolysiloxanique **X** telle que définie supra ou par mélange des parties **P1** et **P2** du système bicomposant **S** tel que défini supra, et suivi d'une réticulation et/ou durcissement de la composition résultante.

Un autre objet de l'invention concerne l'utilisation de la composition organopolysiloxanique **X**, du système bicomposant **P** ou de la mousse de silicone selon l'invention et tels que définis ci-dessus pour la tampographie, la préparation de mousses de remplissage ou de joints en mousse dans le domaine du bâtiment, du transport, de l'isolation électrique ou de l'électroménager.

La présente invention va maintenant être décrite plus en détails à l'aide de modes de réalisation pris à titre d'exemple non limitatif.

### EXEMPLES

### EXEMPLES 1 à 10 :

### Préparation de mousses silicone réticulant à température ambiante

On prépare une composition bi-composante comprenant les parties P1 et P2 à partir des constituants listés ci-après(les compositions exactes sont décrite dans les Tableaux 1 et 2:

### 1) Partie P1 :

- **a :** une résine polyorganosiloxane vinylée comprenant des motifs siloxyles M, D^{Vi} et Q (ou « MD^{Vi}Q ») avec Vi= groupement vinyle, M: (CH₃)₃SiO_{1/2}, Q: SiO_{4/2}, D^{vi}: (CH₃)(Vi)SiO_{2/2}
- **b1 :** polydiméthylsiloxane bloqué par des motifs (CH₃)₂ViSiO_{1/2} et dont la viscosité est de 3500 mPa.s à 25°C.
- **b2 :** polydiméthylsiloxane bloqué par des motifs (CH₃)₂ViSiO_{1/2} et dont la viscosité est de 10 000 mPa.s à 25°C.
- **b3 :** polydiméthylsiloxane bloqué par des motifs (CH₃)₂ViSiO_{1/2} et dont la viscosité est de 60 000 mPa.s à 25°C.
- **b4 :** huile polydiméthylsiloxane bloquée à chacune des extrémités de chaînes par un motif Vi(CH₃)₂SiO_{1/2} ayant une viscosité de 100 000 mPa.s à 25°C.
- **c1 :** Silice de combustion traitée avec une huile silicone, ayant une surface spécifique égale à 30m²/g (BET), commercialisée sous la dénomination commerciale AEROSIL^{®} RY50.
- **c3 :** Terre de diatomées commercialisée sous la dénomination commerciale CELITE-SF.
- **c4:** Silice cristalline broyée ayant une surface spécifique égale à 3.3m²/g, commercialisée sous la dénomination commerciale Sikron B4000.
- **c5 :** Silice cristalline broyée traitée en surface par un vinyl silane et ayant une surface spécifique égale à 6.5m²/g, commercialisée sous la dénomination commerciale Silbond 8000TST.
- **c6:** Silice de combustion traitée avec HMDZ (hexaméthyldisilazane), ayant une surface spécifique égale à 200m²/g (BET) et dispersée à 30% dans du polydiméthylsiloxane bloqué par des motifs (CH₃)₂ViSiO_{1/2} et dont la viscosité est de 1500 mPa.s à 25°C.
- **d1 :** Butanol ou **d2 :** Emulsion silicone contenant 58.45% en poids d'eau.
- **e :** Catalyseur au platine de Karstedt.
- **f :** Huile polydiméthylsiloxane bloquée à chacune des extrémités de chaînes par un motif (CH₃)₃SiO_{1/2} et ayant une viscosité de 1000 mPa.s à 25°C.
- **g :** Huile poly(vinylméthyl)(diméthyl)siloxane et ayant une teneur en motif D^{Vi} de 2 % en poids et en motif M^{Vl} de 0,4 % en poids (huile avec groupements vinylés pendant).

### 2) Partie P2:

- **a :** résine polyorganosiloxane vinylée comprenant des motifs siloxyles M, D^{Vi} et Q (ou « MD^{Vi}Q »)
- **b1 :** polydiméthylsiloxane bloqué par des motifs (CH₃)₂(Vi)SiO_{1/2} et dont la viscosité est de de 3500 mPa.s.
- **b3 :** polydiméthylsiloxane bloqué par des motifs (CH₃)₂(Vi)SiO_{1/2} et dont la viscosité est de 60 000 mPa.s à 25°C.
- **b4 :** huile polydiméthylsiloxane bloquée à chacune des extrémités de chaînes par un motif Vi(CH₃)₂SiO_{1/2} ayant une viscosité de 100 000 mPa.s à 25°C
- **f**: huile polydiméthylsiloxane bloquée à chacune des extrémités de chaînes par un motif (CH₃)₃SiO_{1/2} ayant une viscosité de 1000 mPa.s à 25°C
- **i :** huile polydiméthylsiloxane bloquée à chacune des extrémités de chaînes par un motif (CH₃)₂HSiO_{1/2}.
- **h :** huile polyméthylhydrogénosiloxane bloquée à chacune des extrémités de chaînes par un motif (CH₃)₃SiO_{1/2}.
- **i:** solution contenant 1% d'ethynylcyclohexanol dans une huile polydiméthylsiloxane bloqué par des motifs (CH₃)₂(Vi)SiO_{1/2}, ayant une viscosité de 600 mPa.s à 25°C

Les Tableaux 1 et 2 ci-après décrivent les compositions testées.

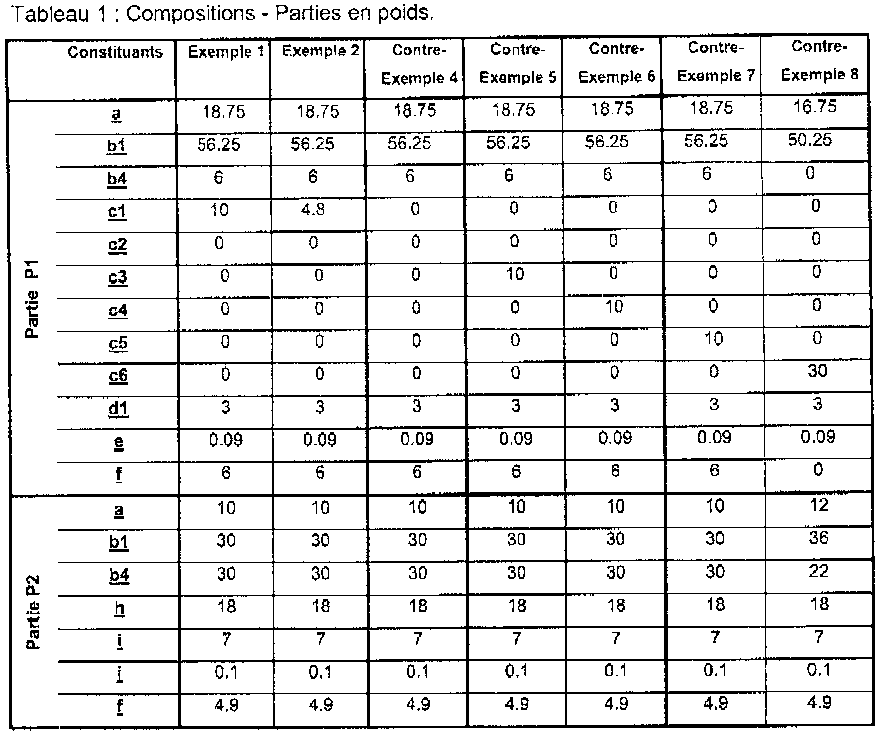

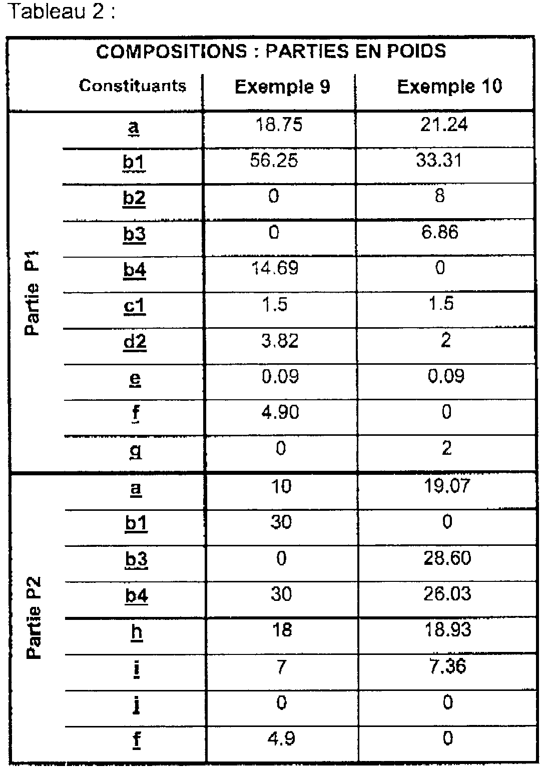

### 3) Mise en oeuvre:

A 50 parties en volume de la partie P1, on ajoute 50 parties en volume de la composante P2. Le moussage et la réticulation sont obtenus après mélange manuel à l'aide d'une spatule, à 23 °C pendant 30 secondes environ.

### 4) Tests

Dans le présent exposé :
- l'abbréviation « R/R » signifie la résistance à la rupture, en MPa selon la norme AFNOR NF T 46002,
- l'abbréviation dureté DS00 signifie la dureté Shore 00,
- l'abbréviation « A/R » signifie l'allongement à la rupture en % selon la norme précédente, et
- l'abbréviation « R/d » signifie la résistance à la déchirure en N/mm.
- Par « bulles de petite taille», on entend des tailles de bulle dont la largeur ou le diamètre est inférieur ou égal à environ 1mm, alors que pour des « bulles de grosse taille » la largeur ou le diamètre est supérieur à 1,5 mm.

**Tableau 3 :**

| **Propriétés** | | **Exemple 1** | **Exemple 2** | **Exemple 9** | **Exemple 10** |
|---|---|---|---|---|---|
| **Viscosité de P1** | | 11000 | 5120 | 9440 | 15800 |
| **Décantation de P1** | | Non | Non | Non | Non |
| **Densité de la mousse réticulée (g/cm3)** | | 0.19 | 0.19 | 0.21 | 0.21 |
| **DS00 après 7 jour à 23°C** | | 38 | 37 | 25 | 35 |
| **Propriétés mécaniques après 7 jour à 23°C** | R/R | 0.21 | 0.19 | 0.10 | 0.20 |
| | A/R | 63 | 63 | 72 | 89 |
| | R/d | 0.86 | 0.84 | 0.80 | 1.4 |
| **Taille des bulles** | | Petites | Petites | Petites | Petites |

**Tableau 4 :**

| **Propriétés** | | **Contre-Exemple 4** | **Contre-Exemple 5** | **Contre-Exemple 6** | **Contre-Exemple 7** | **Contre-Exemple 8** |
|---|---|---|---|---|---|---|
| **Viscosité de P1** | | 3840 | 5880 | 4520 | 4640 | 4720 |
| **Décantation de P1** | | Non | Oui (<1 semaine) | Oui (<1semaine) | Oui (<1semaine) | Non |
| **Densité de la mousse réticulée (g/cm³)** | | 0.23 | 0.18 | 0.18 | 0.18 | 0.24 |
| **DSOO après 7 jours à 23°C** | | 26 | 40 | 41 | 40 | 46 |
| **Propriétés mécaniques après 7 jour à 23°C** | R/R | 0.18 | 0.17 | 0.15 | 0.15 | 0.10 |
| | A/R | 73 | 64 | 53 | 54 | 47 |
| | R/d | 1.27 | 0.95 | 0.87 | 0.76 | 0.83 |
| **Taille des bulles Dispersion de la taille des bulles** | | Grosses hétérogènes | Petites | Petites | Petites | Grosses hétérogènes |

Comme le montrent les exemples 1, 2, 9 et 10 et les contre-exemples 4 à 8, la présence de silice de combustion à faible surface spécifique selon l'invention permet d'obtenir des composants (ou parties) P1 ne présentant pas de problème de décantation de la charge même après plusieurs mois de stockage, et après mélange avec les parties P2 et réticulation permet d'obtenir des mousses de faibles densités (inférieures à 0.25g/cm³) et avec de bonnes propriétés mécaniques.

De plus, toutes les compositions selon l'invention, après mélange des parties P1 et P2, permettent d'obtenir des compositions dont les viscosités sont inférieure à 15 000 mPa.s.
- Le contre-exemple 4 met en évidence la présence indispensable de charges selon l'invention pour obtenir des mousses de faibles densités et avec des cellules dont les tailles sont homogènes et petites.
- Les contre-exemples 5, 6 et 7 mettent en évidence que même la présence de silice cristalline à faible surface spécifique ou d'une charge de nature différente de la silice ne permet pas d'obtenir simultanément l'ensemble des propriétés requises, en particulier la non décantation du composant P1.
- Le contre-exemple 8 met en évidence que la présence de silice de combustion à haute/moyenne surface spécifique (surface spécifique BET de 200m2/g, c'est-à-dire très nettement supérieure à 65m²/g) ne permet pas d'obtenir simultanément l'ensemble des propriétés requises, en particulier l'homogénéité et la taille des bulles.

Les mousses obtenues selon l'invention sont homogènes avec des tailles de pores inférieure ou égale à 1 mm ou (« petites bulles») à contrario des mousses obtenues (Contre-Exemples 4 à 8) qui présentent soit des problèmes de décantaion au stockage, soit des tailles de bulles et/ou une dispersion des tailles de bulles trop importante. Les meilleures mousses selon l'invention sont obtenues lorsque la surface spécifique de la silice de combustion est comprise entre 25 et 45 g/m.

## Revendications

1. Composition organopolysiloxanique **X** précurseur d'une mousse silicone comprenant :
- au moins un polyorganosiloxane **A** ayant une viscosité comprise entre 10 et 300 000 mPa.s et présentant, par molécule, au moins deux groupes alcényles en C₂-C₆ liés au silicium,
- au moins un polyorganosiloxane **B** ayant une viscosité comprise entre 1 et 5000 mPa.s et présentant, par molécule, au moins deux motifs ≡SiH et de préférence au moins trois motifs ≡SiH,
- une quantité catalytiquement efficace d'au moins un catalyseur **C** qui est un composé dérivé d'au moins un métal appartenant au groupe du platine,
- au moins un agent porogène **D**,
- éventuellement au moins une huile **E** diorganopolysiloxanique bloquée à chaque extrémité de sa chaîne par un motif triorganosiloxy dont les radicaux organiques liés aux atomes de silicium, sont choisis parmi les radicaux alkyles ayant de 1 à 8 atomes de carbone inclus tels que les groupes méthyle, éthyle, propyle et 3,3,3-trifluoropropyle, les groupes cycloalkyles comme les groupes cyclohexyle, cycloheptyle, cyclooctyle et les groupes aryle tels que xylyle, tolyle et phényle,
- au moins une charge minérale **F** qui est une silice de combustion dont la surface spécifique **5** est strictement inférieure à 65 m²/g, de préférence strictement inférieure à 50 m²/g et encore plus préférentiellement inférieure ou égale à 45m²/g,
- éventuellement au moins un additif **G,** et
- éventuellement au moins une résine polyorganosiloxane **H,**
- avec comme condition supplémentaire que le choix, la nature et la quantité des constituants sont déterminés de manière à ce que la viscosité de ladite composition organopolysiloxanique **X** soit inférieure à 55000 mPa.s, de préférence inférieure à 30 000 mPa.s et encore plus préférentiellement inférieure à 25 000 mPa.s et lesdites viscosités sont des viscosités dynamiques mesurées à 25°C à l'aide d'un viscosimètre BROOKFIELD selon les indications de la norme AFNOR NFT 76-102.

2. Composition organopolysiloxanique **X** selon la revendication 1 dans laquelle la charge minérale F est une silice de combustion dont la surface spécifique **S** est comprise dans l'intervalle suivant 25m²/g ≤ **S ≤** 45m²/g.

3. Composition organopolysiloxanique **X** selon la revendication 1 ou 2 dans laquelle la charge minérale **F** est une silice de combustion dont ia surface a été préalablement traitée.

4. Composition organopolysiloxanique **X** selon l'une quelconque des revendications précédentes dans laquelle la quantité de la charge minérale F est comprise entre 0,1 et 20 parties en poids pour 100 parties en poids de la composition organopolysiloxanique **X**.

5. Composition organopolysiloxanique **X** selon la revendication 1 dans laquelle l'agent porogène **D** est un composé comprenant une fonction hydroxyle et qui n'est pas un retardateur ou un inhibiteur de la réaction d'hydrosilylation tels qu'un alcool α-acétylènique.

6. Composition organopolysiloxanique **X** selon la revendication 1 ou 5 dans laquelle l'agent porogène **D** est un composé choisi parmi le groupe constitué par un polyol, un alcool qui n'est pas un retardateur ou un inhibiteur de la réaction d'hydrosilylation tels qu'un alcool α-acétylènique, un organosilane ou un polyorganosilane contenant au moins une fonction silanol et l'eau.

7. Composition organopolysiloxanique **X** selon la revendication 1 ou 5 dans laquelle l'agent porogène **D** est un composé choisi parmi le groupe constitué par un diol qui n'est pas un retardateur ou un inhibiteur de la réaction d'hydrosilylation tels qu'un alcool α-acétylènique, un alcool organique ayant de 1 à 12 atomes de carbone et ayant une fonction hydroxyle par molécule, un organosilane ou un polyorganosilane contenant au moins une fonction silanol et l'eau.

8. Système bicomposant **P** précurseur de la composition organopolysiloxanique X telle que définie selon l'une quelconque des revendications précédentes et comprenant les constituants **A, B, C, D, E, F, G** et **H** tels que définis selon l'une quelconque des revendications précédentes, ledit système bicomposant **P** étant **caractérisé :**
- **en ce qu'**il se présente en deux parties **P1** et **P2** distinctes destinées à être mélangées pour former ladite composition organopolysiloxanique **X** et comprenant lesdits constituants, et
- **en ce que** l'une des parties **P1** ou **P2** comprend le catalyseur **C** et l'agent porogène **D** et ne comprend pas le polyorganosiloxane **(B).**

9. Mousse de silicone susceptible d'être obtenue par réticulation et/ou durcissement de la composition organopolysiloxanique **X** telle que définie selon l'une quelconque des revendications 1 à 7 ou par mélange des parties **P1** et **P2** du système bicomposant P tel que défini selon la revendication 8 et suivi d'une réticulation et/ou durcissement de la composition résultante.

10. Utilisation de la composition organopolysiloxanique **X** telle que définie selon l'une quelconque des revendications 1 à 7, du système bicomposant P tel que défini selon la revendication 8 ou de la mousse de silicone telle que définie selon la revendication 9 pour la tampographie.

11. Utilisation de la composition organopolysiloxanique **X** telle que définie selon l'une quelconque des revendications 1 à 7, du système bicomposant **P** tel que défini selon la revendication 8 ou de la mousse de silicone telle que définie selon la revendication 9 pour la préparation de mousses de remplissage ou de joints en mousse dans le domaine du bâtiment, du transport, de l'isolation électrique ou de l'électroménager.

## Patentansprüche

1. Organopolysiloxanzusammensetzung **X**, die ein Vorläufer für einen Silikonschaumstoff ist, umfassend:
- mindestens ein Polyorganosiloxan **A,** das eine Viskosität zwischen 10 und 300.000 mPa.s aufweist und pro Molekül mindestens zwei siliciumgebundene C₂-C₆-Alkenylgruppen aufweist,
- mindestens ein Polyorganosiloxan **B,** das eine Viskosität zwischen 1 und 5000 mPa.s aufweist und pro Molekül mindestens zwei ≡SiH-Einheiten und vorzugsweise mindestens drei =SiH-Einheiten aufweist,
- eine katalytisch wirksame Menge mindestens eines Katalysators **C,** bei dem es sich um eine Verbindung handelt, die sich von mindestens einem Metall der Platingruppe ableitet,
- mindestens einen Porenbildner **D,**
- mindestens ein Diorganopolysiloxanöl **E,** das an jedem Ende seiner Kette durch eine Triorganosiloxy-Einheit, deren an Siliciumatome gebundene organische Reste aus Alkylresten mit 1 bis 8 Kohlenstoffatomen einschließlich wie Methyl-, Ethyl-, Propyl- und 3,3,3-Trifluorpropylgruppen, Cycloalkylgruppen wie Cyclohexyl-, Cycloheptyl- und Cyclooctylgruppen und Arylgruppen wie Xylyl, Tolyl und Phenyl ausgewählt sind, blockiert ist,
- mindestens einen mineralischen Füllstoff **F,** bei dem es sich um eine pyrogen hergestellte Kieselsäure mit einer spezifischen Oberfläche **S,** die streng unter 65 m²/g, vorzugsweise streng unter 50 m²/g liegt und noch weiter bevorzugt kleiner gleich 45 m²/g ist, handelt,
- gegebenenfalls mindestens ein Additiv **G** und
- gegebenenfalls mindestens ein Polyorganosiloxanharz **H,**
- mit der zusätzlichen Bedingung, dass die Wahl, die Beschaffenheit und die Menge der Bestandteile so bestimmt sind, dass die Viskosität der Organopolysiloxanzusammensetzung **X** unter 55.000 mPa.s, vorzugsweise unter 30.000 mPa.s und noch weiter bevorzugt unter 25.000 mPa.s liegt, wobei es sich bei den Viskositäten um mit Hilfe eines Brookfield-Viskosimeters gemäß den Angaben der AFNOR-Norm NFT 76-102 bei 25°C gemessene dynamische Viskositäten handelt.

2. Organopolysiloxanzusammensetzung **X** nach Anspruch 1, wobei es sich bei dem mineralischen Füllstoff **F** um eine pyrogen hergestellte Kieselsäure mit einer spezifischen Oberfläche **S,** die im folgenden Intervall 25 m²/g ≤ **S** ≤ 45 m²/g liegt, handelt.

3. Organopolysiloxanzusammensetzung **X** nach Anspruch 1 oder 2, wobei es sich bei dem mineralischen Füllstoff **F** um eine pyrogen hergestellte Kieselsäure mit vorbehandelter Oberfläche handelt.

4. Organopolysiloxanzusammensetzung **X** nach einem der vorhergehenden Ansprüche, wobei die Menge des mineralischen Füllstoffs **F** zwischen 0,1 und 20 Gewichtsteilen pro 100 Gewichtsteile der Organopolysiloxanzusammensetzung **X** liegt.

5. Organopolysiloxanzusammensetzung **X** nach Anspruch 1, wobei es sich bei dem Porenbildner **D** um eine Verbindung mit einer Hydroxylfunktion und nicht um einen Verzögerer oder Inhibitor der Hydrosilylierungsreaktion wie einen α-acetylenischen Alkohol handelt.

6. Organopolysiloxanzusammensetzung **X** nach Anspruch 1 oder 5, wobei es sich bei dem Porenbildner **D** um eine Verbindung aus der Gruppe bestehend aus einem Polyol, einem Alkohol, bei dem es sich nicht um einen Verzögerer oder Inhibitor der Hydrosilylierungsreaktion wie einen α-acetylenischen Alkohol handelt, einem Organosilan oder einem Polyorganosilan mit mindestens einer Silanolfunktion und Wasser handelt.

7. Organopolysiloxanzusammensetzung **X** nach Anspruch 1 oder 5, wobei es sich bei dem Porenbildner **D** um eine Verbindung aus der Gruppe bestehend aus einem Diol, bei dem es sich nicht um einen Verzögerer oder Inhibitor der Hydrosilylierungsreaktion wie einen α-acetylenischen Alkohol handelt, einem organischen Alkohol mit 1 bis 12 Kohlenstoffatomen und einer Hydroxylfunktion pro Molekül, einem Organosilan oder einem Polyorganosilan mit mindestens einer Silanolfunktion und Wasser handelt.

8. Zweikomponentensystem **P,** das ein Vorläufer der Organopolysiloxanzusammensetzung **X** gemäß einem der vorhergehenden Ansprüche ist und die Bestandteile **A, B, C, D, E, F, G** und **H** gemäß einem der vorhergehenden Ansprüche umfasst, wobei das Zweikomponentensystem **P dadurch gekennzeichnet ist, dass**:
- es in zwei getrennten Teilen **P1** und **P2** vorliegt, die zum Mischen zur Bildung der Organopolysiloxanzusammensetzung **X** vorgesehen sind und die Bestandteile enthalten, und
- einer der Teile **P1** oder **P2** den Katalysator **C** und den Porenbildner **D** umfasst und nicht das Polyorganosiloxan **(B)** umfasst.

9. Silikonschaumstoff, der durch Vernetzung und/oder Härtung der Organopolysiloxanzusammensetzung **X** gemäß einem der Ansprüche 1 bis 7 oder durch Mischen der Teile **P1** und **P2** des Zweikomponentensystems **P** gemäß Anspruch 8 und nachfolgende Vernetzung und/oder Härtung der resultierenden Zusammensetzung erhältlich ist.

10. Verwendung der Organopolysiloxanzusammensetzung **X** gemäß einem der Ansprüche 1 bis 7, des Zweikomponentensystems **P** gemäß Anspruch 8 oder des Silikonschaumstoffs gemäß Anspruch 9 für den Tampondruck.

11. Verwendung der Organopolysiloxanzusammensetzung **X** gemäß einem der Ansprüche 1 bis 7, des Zweikomponentensystems **P** gemäß Anspruch 8 oder des Silikonschaumstoffs gemäß Anspruch 9 zur Herstellung von Füllschaumstoffen oder Schaumstoffdichtungen auf dem Bau-, Transport-, Elektroisolations- oder Elektrogerätesektor.

## Claims

1. An organopolysiloxane composition **X** which is a precursor of a silicone foam, comprising:
- at least one polyorganosiloxane **A** having a viscosity of between 10 and 300 000 mPa.s and exhibiting, per molecule, at least two C₂-C₆ alkenyl groups bonded to the silicon,
- at least one polyorganosiloxane **B** having a viscosity of between 1 and 5000 mPa.s and exhibiting, per molecule, at least two =SiH units and preferably at least three =SiH units,
- a catalytically effective amount of at least one catalyst **C** which is a compound derived from at least one metal belonging to the platinum group,
- at least one porogenic agent **D**,
- optionally at least one diorganopolysiloxane oil **E** blocked at each end of its chain by a triorganosiloxy unit, the organic radicals of which bonded to the silicon atoms are chosen from alkyl radicals having from 1 to 8 carbon atoms inclusive, such as methyl, ethyl, propyl and 3,3,3-trifluoropropyl groups, cycloalkyl groups, such as cyclohexyl, cycloheptyl and cyclooctyl groups, and aryl groups, such as xylyl, tolyl and phenyl,
- at least one inorganic filler **F** which is a fumed silica, the specific surface area **S** of which is strictly less than 65 m²/g, preferably strictly less than 50 m²/g and even more preferentially less than or equal to 45 m²/g,
- optionally at least one additive **G,** and
- optionally at least one polyorganosiloxane resin **H,**
- with the additional condition that the choice, the nature and the amount of the constituents are determined such that the viscosity of said organopolysiloxane composition **X** is less than 55 000 mPa.s, preferably less than 30 000 mPa.s and even more preferentially less than 25 000 mPa.s and said viscosities are dynamic viscosities measured at 25°C using a Brookfield viscometer according to the instructions of the AFNOR NFT 76-102 standard.

2. The organopolysiloxane composition **X** as claimed in claim 1, wherein the inorganic filler **F** is a fumed silica, the specific surface area **S** of which is included in the following range 25 m²/g ≤ **S** ≤ 45 m²/g.

3. The organopolysiloxane composition **X** as claimed in claim 1 or 2, wherein the inorganic filler **F** is a fumed silica, the surface of which has been pretreated.

4. The organopolysiloxane composition **X** as claimed in any one of the preceding claims, wherein the amount of the inorganic filler **F** is between 0.1 and 20 parts by weight per 100 parts by weight of the organopolysiloxane composition **X.**

5. The organopolysiloxane composition **X** as claimed in claim 1, wherein the porogenic agent **D** is a compound comprising a hydroxyl function and which is not a retarder or an inhibitor of the hydrosilylation reaction, such as an α-acetylenic alcohol.

6. The organopolysiloxane composition **X** as claimed in claim 1 or 5, wherein the porogenic agent **D** is a compound chosen from the group consisting of a polyol, an alcohol which is not a retarder or an inhibitor of the hydrosilylation reaction, such as an α-acetylenic alcohol, an organosilane or a polyorganosilane containing at least one silanol function, and water.

7. The organopolysiloxane composition **X** as claimed in claim 1 or 5, wherein the porogenic agent **D** is a compound chosen from the group consisting of a diol which is not a retarder or an inhibitor of the hydrosilylation reaction, such as an α-acetylenic alcohol, an organic alcohol having from 1 to 12 carbon atoms and having one hydroxyl function per molecule, an organosilane or a polyorganosilane containing at least one silanol function, and water.

8. A two-component precursor system **P** for the organopolysiloxane composition **X** as defined in any one of the preceding claims and comprising the constituents **A, B, C, D, E, F, G** and **H** as defined in any one of the preceding claims, said two-component system **P** being **characterized:**
- **in that** it is in two distinct parts **P1** and **P2** intended to be mixed so as to form said organopolysiloxane composition **X** and comprising said constituents, and
- **in that** one of the parts **P1** or **P2** comprises the catalyst **C** and the porogenic agent **D** and does not comprise the polyorganosiloxane **B**.

9. A silicone foam capable of being obtained by crosslinking and/or curing of the organopolysiloxane composition **X** as defined in any one of claims 1 to 7 or by mixing of the parts **P1** and **P2** of the two-component system **P** as defined in claim 8, followed by crosslinking and/or curing of the resulting composition.

10. The use of the organopolysiloxane composition **X** as defined in any one of claims 1 to 7, of the two-component system **P** as defined in claim 8 or of the silicone foam as defined in claim 9, for pad printing.

11. The use of the organopolysiloxane composition **X** as defined in any one of claims 1 to 7, of the two-component system **P** as defined in claim 8 or of the silicone foam as defined in claim 9, for the preparation of filling foams or foam seals in the construction, transportation, electrical insulation or domestic electrical appliance field.
